# EUROPEAN PATENT APPLICATION

(11) **EP 2 796 339 A2**
(43) Date of publication of application: **29.10.2014**
(21) Application number: 14163921.1
(22) Date of filing: 08.04.2014
(51) Int. Cl.: B62B 3/18

(54) **Container**

(30) Priority: 12.04.2013 GB 201306725
(71) Applicant: Hepburn Bond LLP, Walsal End Lane Hampton In Arden B92 0HX (GB)
(72) Inventor: Fordham, Carlos J., Hampton In Arden B92 0HX (GB)
(74) Representative: Oxley, Robin John George

(57) **Abstract**

A roll container (10) comprising a base (12), extends between a first side (14) and a second, opposing, side (16). The sides (14,16) are supported from beneath by a Z-shaped frame (18). In the embodiment shown, the frame (18) is made of steel. The frame (18) is fitted with four wheels (20), one in each corner of the frame (18), for transportation of the container (10). The base (12) is movable between a first working position and a second storage position, wherein the base (12) is retained in its second storage position by a magnetic force.

## Description

The present invention relates to a container for storing and/or transporting goods. In particular, the present invention relates to a container comprising a moveable base which is held in place by a magnetic force.

### Background to the invention

Retailers such as supermarkets rely on logistical equipment to move products around their stores, for example to re-stock shelves. Frequently, products are transported using "roll containers". These containers generally comprise a base onto which stock is loaded, and one or more sides of significant height to partially enclose the stock and prevent it from falling off the base. This allows boxes of products to be stacked so that large quantities of stock can be transported at once. The containers are fitted with wheels to facilitate transportation around the store.

The base of the roll containers may be pivoted into an upright position in which the base is parallel with a side of the container. This allows the roll containers to be nested or stacked together when not in use, thereby saving space. The base may be held it this upright position by simply tying it to the side of the container. However, the tie is easily broken or is not applied by the user so that the base falls down into its normal resting position. This leads to the bases being broken when one roll container is pushed into another to nest them together.

The present invention seeks to mitigate the problem described above.

### Summary of the Invention

In accordance with the first aspect of the present invention, there is provided a container comprising a base, the base being movable between a first working position and a second storage position, wherein the container and/or the base is configured to retain the base in its second storage position by a magnetic force.

As used herein, a "container" will be understood to mean anything that contains, or can contain, something else. A container may have at least one wall or side which at least partially contains the item(s) placed therein. By "contain" it will be appreciated that the container may not completely enclose the item(s), but may simply define a space which is enclosed on at least one side to help retain the item(s) within the space defined by the container. In certain embodiments, the container has two or more sides (in addition to the base).

As used herein, a "base" will be understood as a part of the container which provides a support onto which items to be stored or transported are placed. The base may comprise a planar surface which is approximately horizontal, in use, or it may be inclined.

In some embodiments, the base is retained in the second storage position by a magnetic force between the base and a side of the container. The use of a magnetic force to retain the base in the second storage position is particularly advantageous since it is simple in terms of construction, easy and quick to use, and avoids the user having to operate clips, ties or other mechanisms in order to secure the base in the storage position. The use of a magnetic force also overcomes the problem of breakage of clips or ties and therefore is more secure, thereby reducing the chance of breakage of the base when containers are stacked or nested together.

In some embodiments, one of the base and the side comprises a ferromagnetic material and the other of the base and the side comprises at least one magnet which serves to hold the base in its second storage position. In further embodiments, the side comprises a ferromagnetic material and the base comprises at least one magnet. Thus the magnetic attraction between the ferromagnetic material and the at least one magnet serves to hold the base in the second storage position.

The side of the container may be made entirely from ferromagnetic material. Alternatively, only a part of the side may be made from ferromagnetic material. For example, only a part of the side which comes into contact with the base when in its second storage position may be made from ferromagnetic material.

The strength of the magnet (or the combined strength of the magnets when more than one magnet is used) required will vary depending on factors such as the thickness and weight of the base, the type and positioning of the ferromagnetic material, the whether a coating is applied to the base and/or sides. However, it will be appreciated that the magnetic force must be sufficiently strong to retain the base in the second storage position even when the base and/or the container is knocked (for example, when the containers are nested together), but that the magnetic force must not be so strong that the base cannot be easily separated from the side and returned by a user to the first working position when required. In other words, the magnetic force must not be greater than the force a user can apply with their hands.

In its first working position the base may be substantially orthogonal to the side of the container. For example, the side may be substantially vertical (i.e. upright) and the base may be substantially horizontal. A substantially horizontal base is preferred since it provides a stable platform for supporting goods.

In its second storage position the base may be aligned with the side. In some embodiments, the base is parallel to the side in its second storage position. The base may be positioned such that at least a part of the base abuts the side in its second storage position. Alternatively, the base may be nested in the side in its second storage position. For example, the side may comprise an opening into which the base is received in its second storage position. The opening in the side may correspond approximately to the size of the base such that the base substantially fills the opening when in its second storage position. In the second storage position the base is conveniently stowed, allowing the container to be stacked or nested with one or more other containers.

In some embodiments, the container comprises a first side and a second, opposing, side, the sides being held in a fixed spaced relationship by a frame. In some embodiments, in its first working position the base may extend between the first and the second sides. In some embodiments the frame provides a support for the base when in its first working position. In some embodiments, the frame may also provide a support for the sides of the container. For example, the frame may be positioned at or near to the bottom ends of the sides such that when the base is in its first working position, the frame is underneath the base and supports it. This arrangement is advantageous because it increases the load that the base can carry.

In some embodiments, the base is pivotally attached to a side of the container. Alternatively, the base may be pivotally attached to the frame. A pivotal attachment conveniently allows the base to be moved between the first working position and the second storage position while remaining attached to the container. The base may be attached to the side or the frame of the container by one or more hinges.

The frame may be 'Z', 'A' or 'E'-shaped. Frames of these shapes are strong and conveniently allow the container to be stacked or nested with one or more other containers, when the base is in its second storage position. In some embodiments, the frame is Z-shaped. The frame may be made of any suitable material, such as metal, wood or plastic. In some embodiments, the frame comprises a ferromagnetic material and the base comprises at least one magnet, such that the magnet also functions to retain the base in its first working position. The frame may be made entirely from ferromagnetic material. Alternatively, only a part of the frame which comes into contact with the base when in its first working position is made from ferromagnetic material.

The ferromagnetic material may be any suitable material such as iron, nickel, cobalt, rare earth gadolinium, dysprosium, samarium or neodymium, or alloys thereof. In some embodiments, the ferromagnetic material is steel.

In some embodiments, the container comprises three or four sides. In some particular embodiments, the container comprises fours sides. At least one of the sides may comprise a door or opening through which goods can be placed into and removed from the container. The container may further comprise a lid or roof for protection of the items contained therein.

The container may further comprise wheels or rollers to facilitate transportation of the container. Wheels may be fitted to the sides and/or the frame of the container. In some embodiments, the container comprises four wheels.

In some embodiments, the container is a roll container.

According to a second aspect of the present invention, there is provided a base for a container, wherein the base comprises at least one magnet.

In some embodiments, the magnet is located at or near to the periphery of the base. For example, the magnet may be placed near to an edge opposite to an edge of the base which is pivotally attached to the side or frame of the container.

In embodiments wherein the base comprises a magnet, the magnet may be fixed to a surface of the base. In some embodiments, the magnet is embedded or enclosed within the thickness of the base. This prevents the magnet from protruding from the base, thereby allowing the base to lie flush against the side and/or the frame. It also helps to protect the magnet and reduces the chance of the magnet being detached from the base.

The base may be made of any suitable material, such as wood, metal or plastic. In some embodiments, the base comprises plastic. In some embodiments, the base comprises a substantially planar (e.g. rectangular) panel. The panel may be made of plastic. The base may have holes or perforations therein. Such holes or perforations may help to reduce the weight and/or cost of the base. In some embodiments, an underside of the base comprises cavities therein in which the magnet is positioned. The magnet may be attached to the base by any suitable means, for example by adhesive. Alternatively, the base may be moulded around the magnet.

In some embodiments, the base comprises an opening through which the magnet is visible. For example, the magnet may be positioned within a cavity in the underside of the base. An upper surface may have an opening therein which is aligned with the position of the magnet. The opening advantageously increases the magnetic field in the vicinity of the opening, thereby providing a stronger attractive force between the base and the side and/or frame.

In some embodiments, the base comprises two or more magnets. The magnets may be spaced apart in or on the base. For example, the base may comprise two magnets which are positioned at opposite ends of the base.

### Brief description of the Figures

Embodiments of the invention will now be described with reference to the accompanying Figures in which:
Figure 1 is an end perspective view of a roll container comprising a base in its first working position;
Figure 2 is an end perspective view of a roll container wherein the base is being lifted from its first working position into its second storage position;
Figure 3 is an end perspective partial view of a roll container comprising a base in its second storage position;
Figure 4 is an end perspective view of the container of Figure 2, nested with a further container comprising a base in the second storage position;
Figure 5 is an underside view of a base comprising a magnet; and
Figure 6 is a topside view of a base comprising a magnet.

### Detailed description of certain embodiments

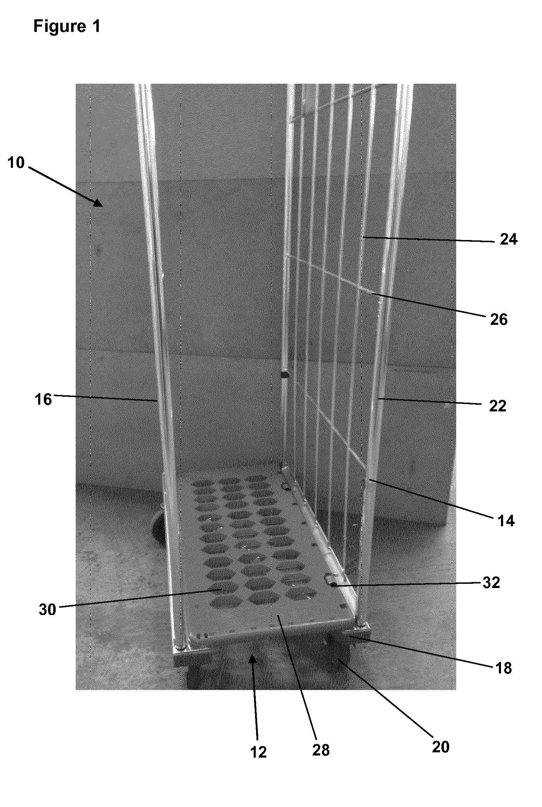

Figure 1 shows a container 10 in accordance with an embodiment of the present invention. The container 10 is a roll container comprising a base 12, which extends between a first side 14 and a second, opposing, side 16. The sides 14, 16 are supported from beneath by a Z-shaped frame 18. In the embodiment shown, the frame 18 is made of steel. The frame 18 is fitted with four wheels 20, one in each corner of the frame 18, for transportation of the container 10.

Each of the sides 14, 16 comprises two, upright and horizontally spaced apart poles 22. Between the poles 22 are a plurality of vertical bars 24, which are intersected by a plurality of horizontal bars 26, forming a mesh. In the embodiment shown, the poles 22 and bars 24, 26 are made of steel.

The base 12 comprises a planar, substantially rectangular, plastic panel 28 with a plurality of hexagonal holes 30 therein. The base 12 is pivotally attached to the frame 18 by a hinge 32 which is positioned adjacent to the first side 14.

Figure 1 shows the base 12 in a first working position. In this position, the base 12 lies substantially horizontally, perpendicular to the first and second sides 14, 16, and is supported by the frame 18.

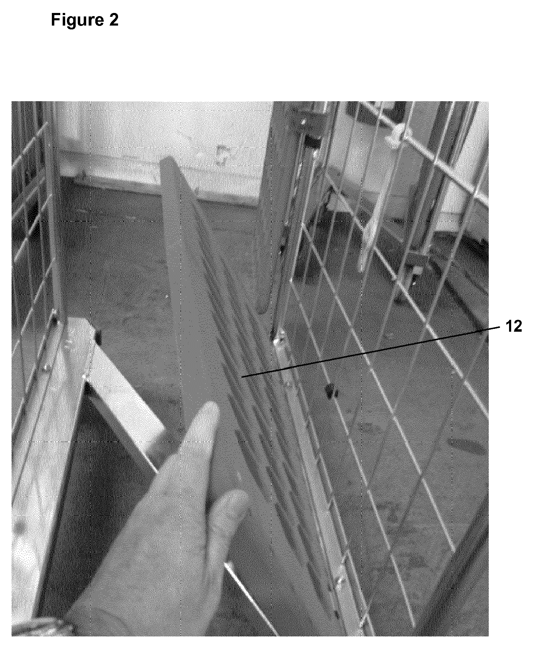

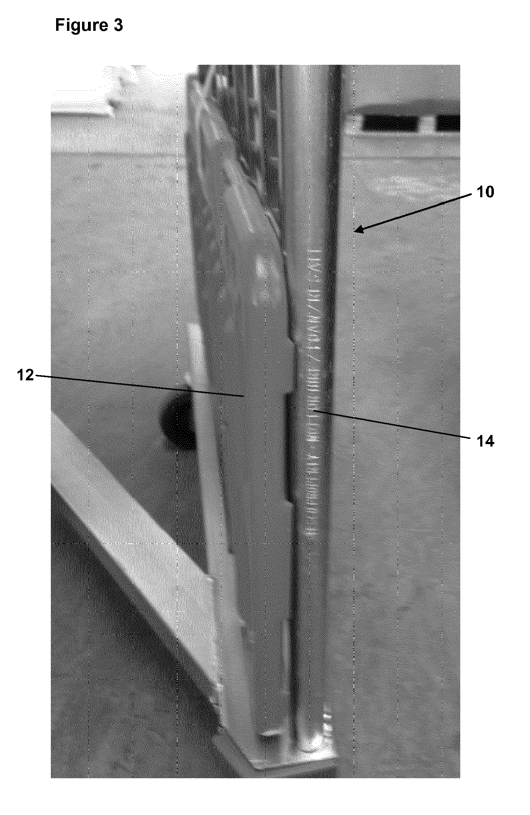

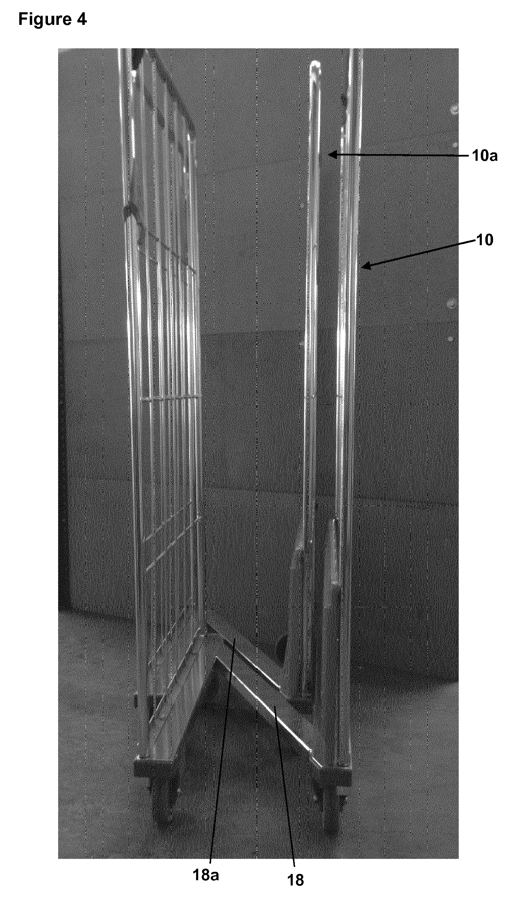

The base 12 can be pivoted by about 90° into a second storage position, as shown in Figure 2. In this position, the base 12 is held upright, aligned with and in contact with the first side 14 of the container 10, as shown in Figure 3. When base 12 is retained in the second storage position, the container 10 can be nested with a second container 10a by slotting the Z-frames 18, 18a together, as shown in Figure 4.

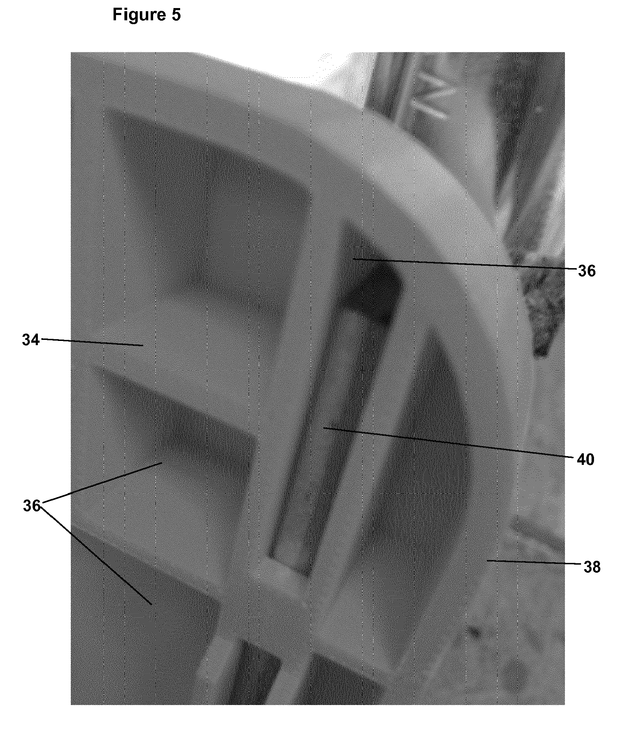

Figure 5 shows an underside 34 of the base 12. The base 12 is moulded such that the underside 34 of the base 12 contains multiple cavities 36, which reduce the weight and cost of the base 12 while maintaining its strength. Embedded in one of the cavities 36, toward an end 38 of the base 12, is an elongate magnet 40. In the embodiment shown, the base 12 was moulded around the magnet 40 in order to hold the magnet 40 in place.

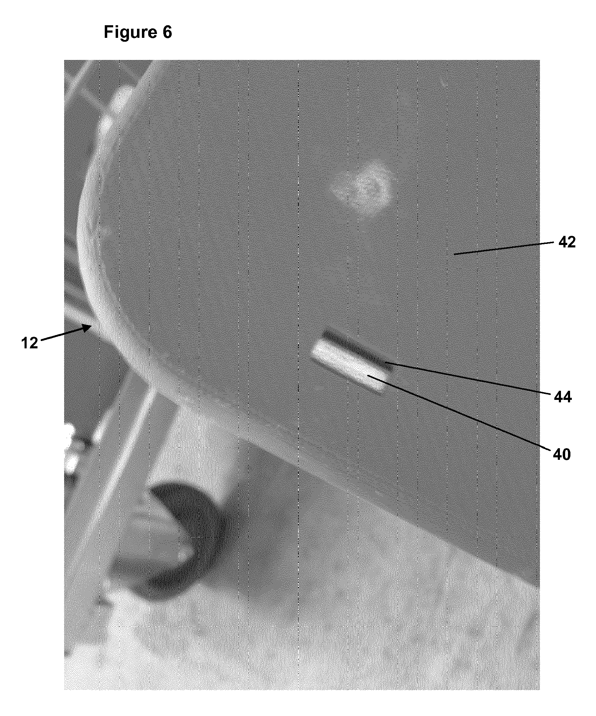

Figure 6 shows an upper surface 42 of the base 12. A rectangular opening 44 has been made in the upper surface 42 of the base 12. The opening 44 is aligned with the position of the magnet 40 in the underside 34 of the base such that the magnet 40 is visible through the opening 44. The opening 44 maximises the magnetic force between the magnet 40 and the magnetic material forming the side 14 of the container 10. Although only one magnet 40 is shown in the embodiments of Figures 4 and 5, it will be understood that the base 12 may, in some embodiments, contain one or more further magnets 40 (e.g. at opposite ends of the base 12). In the second storage position the opening 44 is aligned with the pole 22.

By virtue of the attractive magnetic force between the magnet and the sides of the container the base is securely held in the second storage position, allowing containers to be nested or stacked without damaging the base. The use of a magnetic force is advantageous because it does not require the user to operate a tie or a catch to secure the base in place. Instead, the user can lift the base single-handedly, or can even kick the base upwardly while keeping their hands free to move the container into place. Once the base comes into proximity with the side of the container, the magnetic attraction between the base and the side draws the base into the second storage position and retains it. Since the magnet may be embedded within the base (or the side), there is a reduced chance of it becoming damaged or dislodged compared to a conventional tie or catch. The base is highly unlikely to return to the first working position unless desired, and is therefore protected from damage caused when containers are nested or stacked together.

It will be appreciated by persons skilled in the art that various modifications may be made to the above embodiments described above without departing from the scope of the present invention as defined by the accompanying claims.

## Claims

1. A roll container comprising a base, the base being movable between a first working position and a second storage position, wherein the container and/or the base is configured to retain the base in its second storage position by a magnetic force.

2. The container according to claim 1, wherein the base is retained in the second storage position by a magnetic force between the base and a side of the container.

3. The container according to claim 2, wherein one of the base and the side comprises a ferromagnetic material and the other of the base and the side comprises at least one magnet which serves to hold the base in its second storage position.

4. The container according to claim 3, wherein the side comprises a ferromagnetic material and the base comprises at least one magnet.

5. The container according to any one of claims 2 to 4, wherein in its first working position the base is substantially perpendicular to the side.

6. The container according to any one of claims 2 to 5, wherein in its second storage position the base is aligned with or nested in the side.

7. The container according to any one of claims 2 to 6, comprising a first side and a second, opposing, side, the sides being held in a fixed spaced relationship by a frame, wherein in its first working position the base extends between the first and the second sides and wherein the frame provides a support for the base when in its first working position.

8. The container according to claim 7, wherein the base is pivotally attached to the frame.

9. The container according to any one of claims 2 to 7, wherein the base is pivotally attached to a side of the container.

10. The container according to any one of claims 7 to 9, wherein the frame is Z-shaped.

11. The container according to any preceding claim, further comprising wheels or rollers for transportation of the container.

12. The container according to any preceding claim, wherein when the base is in its second storage position, the container can be stacked or nested with one or more further containers.

13. A base for a roll container, wherein the base comprises at least one magnet.

14. The base according to claim 13, wherein the magnet is embedded or enclosed within the thickness of the base.

15. The base according to claim 13 or 14, wherein the base comprises plastic.

16. The base according to any one of claims 13 to 15, for use with the roll container of any one of claims 1 to 12.
